# EUROPÄISCHE PATENTSCHRIFT

(11) **EP 0 752 974 B1**
(45) Veröffentlichungstag und Bekanntmachung des Hinweises auf die Patenterteilung: **17.11.1999**
(21) Anmeldenummer: 95913040.2
(22) Anmeldetag: 22.03.1995
(51) Int. Cl.: B67D 5/04, B01D 53/22

(54) **VERFAHREN UND VORRICHTUNG ZUR EMISSIONSMINDERUNG AN ATMUNGSLEITUNGEN VON LAGERTANKS**
METHOD AND DEVICES FOR REDUCING EMISSIONS FROM STORAGE-TANK BREATHER LINES
PROCEDE ET DISPOSITIF PERMETTANT DE REDUIRE LES EMANATIONS SE DEGAGEANT AU NIVEAU D'EVENTS DE RESERVOIRS DE STOCKAGE

(30) Priorität: 26.03.1994 DE 4410597
(43) Veröffentlichungstag der Anmeldung: 15.01.1997
(73) Patentinhaber: GKSS-FORSCHUNGSZENTRUM GEESTHACHT GMBH, 21502 Geesthacht (DE)
(72) Erfinder: OHLROGGE, Klaus, D-21502 Geesthacht (DE); WIND, Jan, D-21481 Lauenburg (DE)
(74) Vertreter: Niedmers, Ole, Dipl.-Phys.
(86) Internationale Anmeldenummer: DE9500383
(87) Internationale Veröffentlichungsnummer: WO9526314

(56) Entgegenhaltungen:
- EP-A- 0 329 962
- WO-A-93/22031
- WO-A-95/13984
- DE-A- 4 225 170
- DE-U- 8 702 074
- DE-U- 9 205 552

## Beschreibung

Die Erfindung betrifft ein Verfahren zum Trennen eines über einer in einem Behälter befindlichen Flüssigkeit entstehenden Flüssigkeitsdampf-Gasgemisches, das von dem Behälter durch wenigstens eine Membraneinrichtung mit wenigstens einer Trennmembran geführt wird, an deren Permeatseite mittels wenigstens einer Pumpeneinrichtung ein Unterdruck erzeugt wird und das mit dem Flüssigkeitsdampf angereicherte Permeat in den Behälter zurückgeführt wird, sowie eine Vorrichtung, mit der insbesondere ein derartiges Verfahren ausgeführt werden kann.

Ein Verfahren dieser Art ist bekannt (DE-A-42 25 170). Mittels dieses Verfahrens soll die Effektivität einer Rückführung von Gasgemischen, die beim Befüllen eines Kraftfahrzeugtanks entstehen, d.h. beim eingentlichen Betankungsvorgang, mit einfachen Mitteln verbessert und ein explosionssicherer Betrieb der Tankanlage gewährleistet werden. Dieses soll bei dem bekannten Verfahren dadurch bewirkt werden, daß beim Abpumpen von Gasgemischen aus dem Gasraum des Tanks ständig ein Unterdruck erzeugt und aufrecht erhalten wird und das von dem im Gasraum des Tanks befindliche Gasgemisch kontinuierlich mit Hilfe einer Gastrennanlage ein bis unterhalb der unteren Explosionsgrenze abgemagertes Gasgemisch abgetrennt und abgeführt wird und dadurch das Gasgemisch im Gasraum des Tanks soweit angefettet wird, daß eine obere Explosionsgrenze nicht unterschritten wird. Mit dem bekannten Verfahren soll verhindert werden, daß beim Tanken an der Zapfsäule die beim Einfüllen z.B. von Benzin aus dem Kraftfahrzeugtank verdrängten kohlenwasserstoffhaltigen Dämpfe an die Umgebung abgegeben werden, indem diese mit Hilfe des im Tank herrschenden Unterdrucks wirkungsvoll in den Tank zurückgesaugt und im durch das Entnehmen von Flüssigkeit frei werdenden Tankraums aufgefangen werden. Damit soll jede Geruchsbelästigung im Umfeld einer Tankanlage entfallen und es sollen dadurch auch die gesetzlichen Vorschriften zur Reinhaltung von Luft erfüllt werden können.

Bei Tankstellen befindet sich der Kraftstoffvorrat im allgemeinen in unterirdischen Lagertanks, die zum Druckausgleich über wenigstens eine Belüftungseinrichtung, die sogenannte Atmungsleitung, in Verbindung mit der Außenatmosphäre stehen, so daß kein unzulässiger Überdruck oder Unterdruck im Tank entstehen kann. Insbesondere bei der Entnahme von Kraftstoff aus dem Lagertank oder bei der Befüllung des Lagertanks mit Kraftstoff wird das freie Volumen oberhalb des Flüssigkeitsspiegels verändert, so daß zum Druckausgleich Luft aus der Umgebung durch die Atmungsleitung in den Tank strömt oder das sich in dem Freiraum über der Flüssigkeit befindliche Kraftstoffdampf-Gasgemisch aus der Atmungsleitung in die Umgebungsluft ausgestoßen wird.

Druckschwankungen in dem Lagertank können aber auch aufgrund von Temperaturschwankungen im Tank, durch Verdampfung von Flüssigkeit oder durch Luftdruckschwankungen in der Umgebung des Tankes auftreten. Der Druckausgleich eines im Lagertank herrschenden Unterdruckes durch einströmende Luft kann beispielsweise hinsichtlich der Belastung der Umwelt als unproblematisch bezeichnet werden. Beim Ausgleich eines im Lagertank herrschenden Überdruckes wird jedoch ein mit Kraftstoffdampf belastetes Dampf-Luftgemisch in die Umgebung ausgestoßen, so daß die Umgebung in einem unerwünschten Maße belastet wird oder die in diesem Bereich tätigen Personen eine gesundheitliche Beeinträchtigung erfahren.

Zur Verringerung der Emission eines Dampf-Gasgemisches beim Umfüllen des Kraftstoffes aus dem Lagertank in den Tank eines Kraftfahrzeuges sind sogenannte aktive Rückführungssysteme bekannt, die mittels einer entsprechenden Pumpeneinrichtung die bei der Betankung des Kraftfahrzeugs entstehenden Dampf-Gasgemische absaugen und in den Lagertank der Tankstelle zurückführen. In der Regel werden derartige Systeme so betrieben, daß das Volumen des rückgeführten Dampf-Gasgemisches gleich dem Volumen des entnommenen Kraftstoffes ist. Um die Effektivität solcher Rückführungssysteme zu erhöhen, ist es zweckmäßig, daß das Volumen des rückgeführten Dampf-Gasgemisches mindestens gleich, in vorteilhafter Weise jedoch größer als das Volumen des entnommenen Kraftstoffes ist. Dies hat zur folge, daß auch bei einer Kraftstoffentnahme durch die Rückführung eines größeren Volumens in den Lagertank ein Druckanstieg im Lagertank auftreten kann, der durch Abführen des sich über der Flüssigkeit befindlichen Dampf-Gasgemisches über die Atmungsleitung in die Umgebung ausgeglichen würde. Da die Atmungsleitungen im allgemeinen nicht oder nur mit unzureichenden Filterelementen ausgestattet sind, würde durch den zwangsläufig erforderlichen Druckausgleich die Effektivität der beim Betanken eines Kraftfahrzeuges eingesetzten Rückführungssystems stark verringert werden, da zwar im Bereich der Zapfsäule die Schadstoffemission verringert werden kann, jedoch in einem anderen Bereich der Tankstelle eine gewisse Menge eines mit Kraftstoffdampf belasteten Dampf-Luftgemisches ausgestoßen wird.

Der Erfindung liegt die Aufgabe zugrunde, ein Verfahren und eine Vorrichtung zu schaffen, mit denen die Schadstoffemission im Bereich der Atmungsleitung eines Tankes zum Lagern von Flüssigkeiten, insbesondere von Kraftstoffen für Kraftfahrzeuge, verringert werden kann.

Die Aufgabe wird durch ein Verfahren gemäß der Erfindung dadurch gelöst, daß das Flüssigkeitsdampf-Gasgemisch zum Überdruckausgleich aus dem Behälter über eine Leitung derart abgeführt wird, daß das mit dem Flüssigkeitsdampf abgereicherte Retentat über eine Ableitung abgeführt wird, wobei die Pumpeneinrichtung in Abhängigkeit von dem im Behälter herrschenden Überdruck beim Überschreiten eines vorbestimmten Unterdrucks eingeschaltet wird.

Dieses erfindungsgemäße Verfahren zur Verringerung der Schadstoffemission im Bereich der Ableitung eines Lagertankes kann unter der Verwendung von einfachen Mitteln erfolgen. Insbesondere bei der Verwendung von semipermeablen Gastrennmembranen, die bevorzugt Dämpfe permeieren lassen, kann gewährleistet werden, daß durch den erzeugten Unterdruck das durch die Membraneinrichtung strömende Flüssigkeitsdampf-Gasgemisch weitgehend von dem Flüssigkeitsdampf befreit wird. Das aus der Ableitung austretende Gemisch stellt somit keine oder nur eine unwesentliche Beeinträchtigung der Umwelt dar.

Daß die Pumpeneinrichtung in Abhängigkeit von dem im Behälter herrschenden Überdruck beim Überschreiten eines vorbestimmten Überdruckes eingeschaltet wird, hat den Vorteil, daß die Pumpeneinrichtung lediglich beim Ausströmen eines Dampf-Gasgemisches in Betrieb ist, so daß der Energieverbrauch gering gehalten werden kann. Auch besteht bei dieser Verfahrensführung die Möglichkeit, daß die Belüftung des Tankes zum Ausgleich eines im Tank herrschenden Unterdruckes durch die Ableitung erfolgen kann, da bei abgestellter Pumpeneinrichtung und einströmender Umgebungsluft nicht die Gefahr besteht, daß sich die Trennmembran durch eventuell in der Umgebungsluft vorhandenen Schmutzpartikel zusetzt.

Bei einer zweckmäßigen Ausgestaltung der Erfindung ist die Ableitung durch wenigstens ein Überdruckventil verschließbar und die Pumpeneinrichtung wird in Abhängigkeit von der Stellung des Ventils bei geöffnetem Ventil ein- und bei geschlossenem Ventil ausgeschaltet. Diese Verfahrensweise hat den Vorteil, daß der Behälter für den Kraftstoff bei Druckgleichgewicht vollständig geschlossen ist, so daß auch drucklos ablaufende Diffusionsvorgänge zwischen dem Dampf-Gasgemisch über der Flüssigkeit einerseits und der Außenatmosphäre andererseits nicht stattfinden können. Weiterhin ist diese Verfahrensweise mit sehr einfachen Mitteln durchführbar, da beispielsweise lediglich ein mechanischer Schalter vorhanden sein muß, der von dem Ventilkörper, z. B. der Ventilkugel, betätigbar ist und unmittelbar die Pumpeneinrichtung einschaltet.

In einer zweckmäßigen Ausgestaltung der Erfindung ist vorgesehen, daß die Pumpeneinrichtung zur Erzeugung des Unterdruckes auf der Permeatseite der Tennmembran in Abhängigkeit von der Stellung eines Entnahme- und/oder Auffüllventils des Tanks für die Flüssigkeit bei geöffnetem Ventil eingeschaltet wird. Dies hat den Vorteil, daß insbesondere bei aktiver Beeinflußung des Füllzustandes des Tanks ein dabei eventuell austretendes Dampf-Gasgemisch zuverlässig von der Flüssigkeitsdampfbelastung befreit wird. Dies ist insbesondere dann zweckmäßig, wenn die das Entnahmeventil enthaltende Entnahmevorrichtung mit einem eingangs geschilderten, sogenannten aktiven Rückführsystem für Dampf-Gasgemische versehen ist, die beim Umfüllen der Flüssigkeit, beispielsweise beim Betanken eines Kraftfahrzeuges, entstehen. In diesem Fall wird nämlich ein bestimmtes, im allgemeinen größeres Volumen des an der Zapfpistole abgesaugten Dampf-Gasgemisches als das der entnommenen Flüssigkeit in den Tank zurückgeführt, wobei aufgrund der geringen Entnahmegeschwindigkeit und der daraus resultierenden geringen Rückführgeschwindigkeit des Dampf-Gasgemisches ein Druckausgleich über die Atmungsleitung im allgemeinen ohne vorherigen merklichen Druckanstieg erfolgen wird. Insbesondere bei der Verwendung eines Überdruckschalters für die Ansteuerung der Pumpeneinrichtung besteht die Gefahr, daß dieser durch das langsame, ohne Druckanstieg erfolgende Ausströmen des Dampf-Gasgemisches nicht anspricht, so daß das Dampf-Gasgemisch ohne die Abtrennung eines mit dem Flüssigkeitsdampf angereicherten Permeats in die Umgebung gelangt.

Die Vorrichtung gemäß der Erfindung zum Trennen eines über einer in einem Behälter befindlichen Flüssigkeit entstehenden Flüssigkeitsdampf-Gasgemisches, das zum Überdruckausgleich aus dem Behälter über eine Leitung und anschließend über eine Ableitung abgeführt wird, insbesondere zum Durchführen des erfindungsgemäßen Verfahrens, weist wenigstens eine Membraneinrichtung mit wenigstens einer Trennmembran auf, deren Zufuhrseite für das Flüssigkeitsdampf-Gasgemisch mit dem Behälter und deren Retentatseite mit der Ableitung verbunden ist, wobei die Permeatseite zum Rückführen des mit dem Flüssigkeitsdampf angereicherten Permeats über eine Pumpeneinrichtung zur Erzeugung eines Unterdruckes auf der Permeatseite der Trennmembran mit dem Behälter verbunden ist, und daß ein Überdruckschalter vorhanden ist, dessen Druckaufnehmer mit dem Inneren des Behälters verbunden ist und der mit der Pumpe zum Erzeugen eines Unterdruckes derart zusammenwirkt, daß beim Überschreiten eines vorbestimmten Überdrucks im Behälter die Pumpe eingeschaltet wird.

In einer zweckmäßigen Ausgestaltung der Erfindung ist dabei vorgesehen, daß die Ableitung wenigstens ein Drosselelement aufweist. Dies hat den Vorteil, daß ein eventuell im Behälter vorhandenes überschüssiges Dampf-Gasgemisch nicht ohne weiteres durch die Ableitung entweichen kann, sondern zunächst ein Überdruck aufgebaut wird, so daß der Überdruckschalter ansprechen kann.

Zweckmäßig kann es dabei sein, daß das Drosselelement als Lochblende ausgebildet ist. Die Lochblende kann in einfacher Weise in die im allgemeinen als Rohrleitungen ausgebildete Ableitung des Behälters eingesetzt werden.

In einer anderen zweckmäßigen Ausgestaltung der Erfindung ist vorgesehen, daß die Ableitung wenigstens ein Überdruckventil aufweist, durch das die Ableitung verschließbar ist, und daß wenigstens eine einen Kontrollschalter aufweisende Kontrolleinrichtung vorgesehen ist, die derart mit dem Überdruckventil und der Pumpeneinrichtung zum Erzeugen eines Unterdruckes zusammenwirkt, daß die Pumpeneinrichtung bei geöffnetem Ventil ein- und bei geschlossenem Ventil ausgeschaltet ist. Diese Anordnung hat den Vorteil, daß die Vorrichtung zum Trennen des austretenden Dampf-Gasgemisches auch bei vollständig verschließbaren Behälter zum Aufbewahren von Flüssigkeiten, insbesondere von Kraftstoffen für Verbrennungsmotoren, eingesetzt werden kann.

Die Erfindung wird im folgenden anhand der Zeichnung näher erläutert. Es zeigen:
- Fig. 1: in Schema eine Tankstelle mit einer Vorrichtung zur Durchführung des Verfahrens gemäß der Erfindung und
- Fig. 2: in Schema eine Tankstelle mit einer Vorrichtung zur Durchführung des Verfahrens gemäß der Erfindung in einer anderen Ausführungsform.

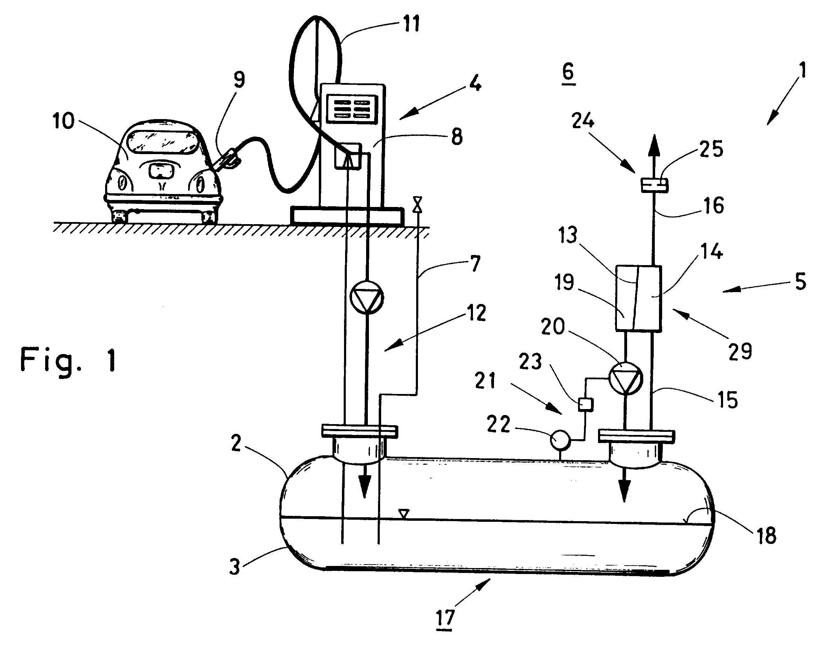

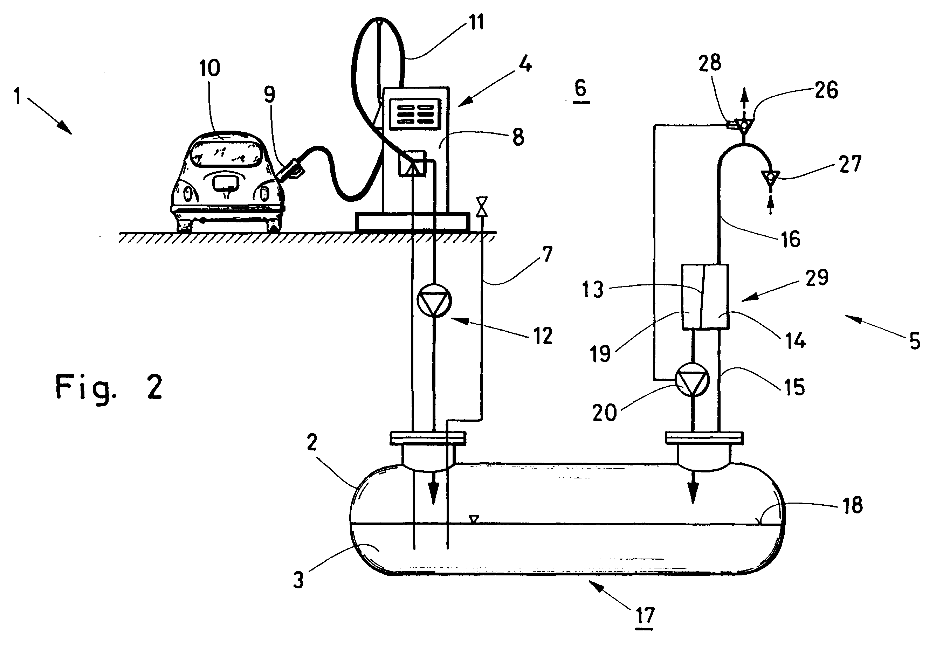

Die in den Figuren 1 und 2 gezeigten Ausführungsbeispiele stimmen in ihrem Aufbau im wesentlichen überein und unterscheiden sich hauptsächlich in der Ansteuerung der Vakuumpumpe zur Erzeugung des Unterdruckes auf der Permeatseite des Trennmembrans. Es werden daher gleiche Einrichtungsteile und Elemente mit gleichen Bezugszeichen versehen.

Die in der Zeichnung schematisch dargestellte Tankstelle 1 weist einen Tank 2 zum Lagern des Kraftstoffvorrates 3 auf. Der Tank 2 steht in Verbindung mit einer Entnahmeeinrichtung 4 für den flüssigen Kraftstoff. Weiterhin ist eine Belüftungseinrichtung 5 vorgesehen, durch die ein Druckausgleich des Tanks 2 mit der Umgebung 6 erfolgen kann. Ferner ist der Tank 2 mit einer Füllvorrichtung 7 versehen, über die der Kraftstoff in den Tank 2 eingefüllt werden kann.

Die Entnahmeeinrichtung 4 weist eine im allgemeinen bekannte Zapfsäule 8 auf, an der die Zapfpistole 9 zum Betanken eines Kraftfahrzeuges 10 über einen flexiblen Verbindungsschlauch 11 angeschlossen ist. Weiterhin ist die Entnahmeeinrichtung 4 mit einem in der Zeichnung nicht näher dargestellten aktiven Rückführsystem 12 des beim Betanken des Kraftfahrzeuges entstehenden DampfGasgemisches versehen. Diese Rückführungssysteme 12 sind allgemein bekannt und bedürfen keiner weiteren Erläuterung.

Die Belüftungseinrichtung 5 weist eine Membraneinrichtung 29 mit einer Trennmembran 13 auf. Die Retentatseite 14 der Trennmembran 13 ist einerseits über eine Leitung 15 mit dem Behälter 2 und andererseits mit der Ableitung 16, die in die Umgebung 6 mündet, verbunden. Im einzelnen ist die Anordnung so getroffen, daß die Leitung 15 im oberen Bereich 17 des Tanks 2 überhalb des Flüssigkeitsspiegels 18 in den Tank 2 mündet. Ein gegebenenfalls zum Druckausgleich aus dem Tank 2 austretendes Kraftstoffdampf-Luftgemisch kann daher nur durch die Leitung 15 über die Membraneinrichtung 29 durch die Ableitung 16 in die Umgebung 6 gelangen.

Die Permeatseite 19 der Membraneinrichtung 29 ist mit der Unterdruckseite einer Vakuumpumpe 20 verbunden, die ihrerseits mit dem Tank 2 in Verbindung steht. Während des Betriebes der Vakuumpumpe 20 liegt auf der Permeatseite 19 der Membraneinrichtung 29 ein Unterdruck an, so daß der Kraftstoffdampf eines damit belasteten und auf der Retentatseite 14 durch die Membraneinrichtung strömenden Dampf-Luftgemisches auch die Trennmembran 13 permieren kann. Die Trennmembran 13 ist dabei zweckmäßigerweise als semipermeable Gastrennmembran ausgebildet. Das dadurch mit Kraftstoffdampf angereicherte Permeat kann über die Vakuumpumpe 20 in den Tank 2 zurückgeführt werden.

Bei dem Ausführungsbeispiel gemäß Figur 1 ist zur Ansteuerung der Vakuumpumpe 20 ein Überdruckschalter 21 vorgesehen, dessen Druckaufnehmer 22 im oberen Bereich 17 des Tanks 2 angeordnet ist. Dieser Druckaufnehmer 22 wirkt mit einem Schalter 23 für die Vakuumpumpe 20 zusammen. Im einzelnen ist die Anordnung so getroffen, daß bei Überschreiten eines vorbestimmbaren Überdruckes im Tank 2 der Schalter 23 anspricht und die Vakuumpumpe 20 in Betrieb setzt. Das aufgrund des im Inneren des Tanks 2 herrschenden Überdruckes austretende Dampf-Luftgemisch strömt durch die Membraneinrichtung 29, in der der Kraftstoffdampf aufgrund des anliegenden Unterdruckes an der Trennmembran 13 von dem Dampf-Luftgemisch getrennt wird, so daß das durch die Ableitung 16 austretende Retentat weitgehend von Kraftstoffdampf befreit ist. Um einen für das Ansprechen des Überdruckschalters 21 ausreichende Druckerhöhung im Inneren des Tanks 2 zu bewirken, weist die Ableitung 16 ein als Lochscheibe 25 ausgebildetes Drosselelement 24 auf.

Bei der in Fig. 2 dargestellten Ausführungsform weist die Ableitung 16 ein Überdruckventil 26 auf, das bei einem austretenden Flüssigkeitsdampf-Gasgemisch öffnet. Weiterhin ist ein Unterdruckventil 27 vorgesehen, daß bei herrschendem Unterdruck im Inneren des Tankes 2 bei einströmender Umgebungsluft öffnet. Das Überdruckventil 26 ist mit einem Kontrollschalter 28 versehen, der mit der Vakuumpumpe 20 zusammenwirkt. Im einzelnen ist die Anordnung dabei so getroffen, daß der Kontrollschalter 28 bei geöffnetem Ventil 26, also bei austretendem Dampf-Gasgemisch, anspricht und die Vakuumpumpe 20 in Betrieb setzt. Dadurch wird in zuverlässiger Weise gewährleistet, daß bei austretendem Dampf-Gasgemisch der in der Membraneinrichtung 29 ablaufende Trennprozeß durchgeführt wird.

Es ist offensichtlich, daß mit den in der Zeichnung dargestellten Ausführungsformen eine zuverlässige Emissionsverminderung im Bereich der Atmungsleitung eines Tanks einer Tankstelle durchgeführt werden kann. Es kann auch vorgesehen werden, daß die Pumpeneinrichtung 20 in Abhängigkeit von der Betätigung des Entnahmeventils der Entnahmeeinrichtung 4 oder des Auffüllventils der Auffülleinrichtung 7 einschaltbar ist. Insbesondere bei der Verwendung eines aktiven Rückführsystems 12, bei dem das beim Betanken entstehende Dampf-Gasgemisch wieder in den Tank 2 zurückgeführt wird, kann sichergestellt werden, daß auch solche austretenden Dampf-Gasgemische in der Membraneinrichtung 12 getrennt werden, die ohne oder nur mit einem unwesentlichen Druckaufbau im Inneren des Tanks 2 aus der Ableitung 16 entweichen.

### Bezugszeichenliste

- 1: Tankstelle
- 2: Tank
- 3: Kraftstoffvorrat
- 4: Entnahmeeinrichtung
- 5: Belüftungseinrichtung
- 6: Umgebung
- 7: Auffülleinrichtung
- 8: Zapfsäule
- 9: Zapfpistole
- 10: Kraftfahrzeug
- 11: Verbindungsleitung
- 12: Akives Rückführsystem
- 13: Trennmembran
- 14: Retentatseite
- 15: Leitung
- 16: Ableitung
- 17: Oberer Bereich des Tankes 2
- 18: Flüssigkeitsspiegel
- 19: Permeatseite
- 20: Vakuumpumpe
- 21: Überdruckschalter
- 22: Druckaufnehmer
- 23: Schalter
- 24: Drosselelement
- 25: Lochblende
- 26: Überdruckventil
- 27: Unterdruckventil
- 28: Kontrollschalter
- 29: Membraneinrichtung

## Patentansprüche

1. Verfahren zum Trennen eines über einer in einem Behälter (2) befindlichen Flüssigkeit entstehenden Flüssigkeitsdampf-Gasgemisches, das von dem Behälter (2) durch wenigstens eine Membraneinrichtung (29) mit wenigstens einer Trennmembran (13) geführt wird, an deren Permeatseite (19) mittels wenigstens einer Pumpeneinrichtung (20) ein Unterdruck erzeugt wird und das mit dem Flüssigkeitsdampf angereicherte Permeat in den Behälter (2) zurückgeführt wird, dadurch gekennzeichnet, daß das Flüssigkeitsdampf-Gasgemisch zum Überdruckausgleich aus dem Behälter (2) über eine Leitung (15) derart abgeführt wird, daß das mit dem Flüssigkeitsdampf abgereicherte Retentat über eine Ableitung (16) abgeführt wird, wobei die Pumpeneinrichtung (20) in Abhängigkeit von dem im Behälter (2) herrschenden Überdruck bei Überschreiten eines vorbestimmten Überdrucks eingeschaltet wird.

2. Verfahren nach Anspruch 1, dadurch gekennzeichnet, daß die Ableitung (16) durch wenigstens ein Überdruckventil (26) verschließbar ist und die Pumpeneinrichtung (20) in Abhängigkeit von der Stellung des Ventils (26) bei geöffnetem Ventil ein- und bei geschlossenem Ventil ausgeschaltet wird.

3. Verfahren nach einem der Ansprüche 1 oder 2, dadurch gekennzeichnet, daß die Pumpeneinrichtung (20) in Abhängigkeit von der Stellung eines Entnahmeventils und/oder Auffüllventils des Behälters (2) für die Flüssigkeit bei geöffnetem Ventil eingeschaltet wird.

4. Vorrichtung zum Trennen eines über einer in einem Behälter (2) befindlichen Flüssigkeit (3) entstehenden Flüssigkeitsdampf-Gasgemisches, das zum Überdruckausgleich aus dem Behälter (2) über eine Leitung (15) und anschließend über eine Ableitung (16) abführbar ist, insbesondere zum Durchführen des Verfahrens gemäß einem der vorstehenden Ansprüche, gekennzeichnet durch wenigstens eine Membraneinrichtung (29) mit wenigstens einer Trennmembran (13), deren Zufuhrseite für das Flüssigkeitsdampf-Gasgemisch mit dem Behälter (2) und deren Retentatseite (14) mit der Ableitung (16) verbunden ist, wobei die Permeatseite (19) zum Rückführen des mit dem Flüssigkeitsdampf angereicherten Permeats über eine Pumpeneinrichtung (20) zur Erzeugung eines Unterdruckes auf der Permeatseite (19) der Trennmembran (13) mit dem Behälter (2) verbunden ist, und ein Überdruckschalter (21) vorgesehen ist, dessen Druckaufnehmer (22) mit dem Inneren (17) des Behälters (2) verbunden ist und der mit der Pumpe (20) zum Erzeugen eines Unterdruckes derart zusammenwirkt, daß beim Überschreiten eines vorbestimmten Überdrucks die Pumpe eingeschaltet wird.

5. Vorrichtung nach Anspruch 4, dadurch gekennzeichnet, daß die Ableitung (16) mit wenigstens einem Drosselelement (24) versehen ist.

6. Vorrichtung nach Anspruch 5, dadurch gekennzeichnet, daß das Drosselelement (24) als Lochblende (25) ausgebildet ist.

7. Vorrichtung nach einem der Ansprüche 4 bis 6, dadurch gekennzeichnet, daß die Ableitung (16) wenigstens ein Überdruckventil (26) aufweist, und daß wenigstens eine einen Kontrollschalter (28) aufweisende Kontrolleinrichtung vorgesehen ist, die derart mit dem Überdruckventil (26) und der Pumpe (20) zum Erzeugen eines Unterdruckes zusammenwirkt, daß die Pumpe (20) bei geöffnetem Ventil ein- und bei geschlossenem Ventil ausgeschaltet ist.

## Claims

1. Process for separating a mixture of the vapour of a liquid and gas which forms above a liquid situated in a container (2) and which is passed from the container (2) through at least one membrane device (29) with at least one separation membrane (13) on whose permeate side (19) a negative pressure is generated by means of at least one pumping device (20) and the permeate enriched with the vapour of the liquid is recycled into the container (2), characterised in that, in order to balance the positive pressure, the mixture of the vapour of the liquid and gas is removed from the container (2) through a pipe (15) in such a way that the retentate depleted in the vapour of the liquid is withdrawn through an outlet pipe (16) whereby, depending on the positive pressure prevailing in the container (2), the pumping device (20) is switched on when a predetermined positive pressure is exceeded.

2. Process according to Claim 1, characterised in that the outlet pipe (16) is closable by at least one overpressure valve (26) and, depending on the position of the valve (26), the pumping device (20) is switched on when the valve is open and switched off when the valve is closed.

3. Process according to one of the Claims 1 or 2, characterised in that, depending on the position of the withdrawal valve and/or filling valve of the container (2) for the liquid, the pumping device (20) is switched on when the valve is open.

4. Apparatus for separating a vapour of a liquid and gas which forms above a liquid (3) situated in a container (2) and which, in order to balance the pressure, is withdrawable from the container (2) through a pipe (15) and subsequently through an outlet pipe (16), in particular to carry out the process according to one of the foregoing Claims, characterised by at least one membrane device (29) with at least one separation membrane (13) whose inlet side for the mixture of the vapour of a liquid and gas is connected to the container (2) and whose retentate side (14) is connected to the outlet pipe (16) whereby, in order to recycle the permeate enriched with the vapour of the liquid, the permeate side (19) is connected to the container (2) via a pumping device (20) to generate a negative pressure on the permeate side (19) of the separation membrane (13) and there is provided an overpressure switch (21) whose pressure sensor (22) is connected to the interior (17) of the container (2) and acts in conjunction with the pump (20) to generate a negative pressure in such a way that the pump is switched on when a pre-defined positive pressure is exceeded.

5. Apparatus according to Claim 4, characterised in that the outlet pipe (16) is equipped with at least one restrictor element (24).

6. Apparatus according to Claim 5, characterised in that the restrictor element (24) is constructed in the form of an orifice plate (25).

7. Apparatus according to one of the Claims 4 to 6, characterised in that the outlet pipe (16) has at least one overpressure valve (26) and in that there is provided at least one control device having a control switch (28) which acts together with the overpressure valve (26) and the pump (20) for generating a negative pressure in such a way that the pump (20) is switched on when the valve is open and switched off when the valve is closed.

## Revendications

1. Procédé de séparation d'un mélange de gaz-vapeur liquide qui se dégage d'un liquide se trouvant dans un réservoir de stockage (2) et qui est amené par le réservoir de stockage (2) en passant par au moins un dispositif à membrane (29) comportant au moins une membrane de séparation (13) sur le côté du perméat (19) de laquelle une dépression est générée à l'aide d'au moins un dispositif de pompage (20), ledit mélange étant recyclé dans le réservoir de stockage (2) avec le perméat enrichi de la vapeur liquide, caractérisé en ce que, pour la compensation de surpression, le mélange de gaz-vapeur liquide est évacué du réservoir de stockage (2) par l'intermédiaire d'une conduite (15) de telle sorte que le rétentat enrichi de la vapeur liquide est évacué par l'intermédiaire d'une conduite d'évacuation (16), le dispositif de pompage (20) étant enclenché en fonction de la surpression régnant dans le réservoir de stockage (2) lors du dépassement d'une surpression prédéterminée.

2. Procédé selon la revendication 1, caractérisé en ce que la conduite d'évacuation (16) peut être fermée par au moins une soupape de surpression (26) et en ce que le dispositif de pompage (20) fonctionne selon la position de la soupape (26), est enclenché en cas de soupape ouverte et arrêté en cas de soupape fermée.

3. Procédé selon la revendication 1 ou 2, caractérisé en ce que le dispositif de pompage (20) est enclenché en cas de soupape ouverte, en fonction de la position d'une soupape de prélèvement et/ou d'une soupape de remplissage du réservoir de stockage (2) pour le liquide.

4. Dispositif de séparation d'un mélange de gaz-vapeur liquide qui se dégage d'un liquide se trouvant dans un réservoir de stockage (2) et qui, pour la compensation de surpression, est évacué du réservoir de stockage (2) par l'intermédiaire d'une conduite (15) et ensuite d'une conduite d'évacuation (16), en particulier pour l'exécution du procédé selon l'une quelconque des revendications précédentes, caractérisé en ce qu'il est prévu au moins un dispositif à membrane (29) comportant au moins une membrane de séparation (13) dont le côté d'admission pour le mélange gaz-vapeur liquide est relié au réservoir de stockage (2) et dont le côté du rétentat (14) est relié à la conduite d'évacuation (16), le côté du perméat (19) étant relié au réservoir de stockage (2) pour le recyclage du perméat enrichi de la vapeur liquide par l'intermédiaire d'un dispositif de pompage (20) en vue de générer une dépression sur le côté du perméat (19) de la membrane de séparation (13) et en ce qu'il est prévu un interrupteur à surpression (21) dont le capteur de pression (22) est relié à l'intérieur (17) du réservoir de stockage (2) et qui coopère avec la pompe (20) pour générer une dépression de telle sorte que la pompe est enclenchée en cas de dépassement d'une surpression prédéterminée.

5. Dispositif selon la revendication 4, caractérisé en ce que la conduite d'évacuation (16) est munie d'au moins un élément d'étranglement (24).

6. Dispositif selon la revendication 5, caractérisé en ce que l'élément d'étranglement (24) est réalisé en tant que diaphragme à trou (25)

7. Dispositif selon l'une quelconque des revendications 4 à 6, caractérisé en ce que la conduite d'évacuation (16) présente au moins une soupape de surpression (26) et en ce qu'il est prévu au moins un dispositif de contrôle qui présente un interrupteur de contrôle (28) et qui coopère avec la soupape de surpression (26) ainsi que la pompe (20) pour générer une dépression de telle sorte que la pompe (20) est enclenchée en cas de soupape ouverte et arrêtée en cas de soupape fermée.
